Europäisches Patentamt

**European Patent Office**

Office européen des brevets

(19)

(11) Veröffentlichungsnummer: **0 188 223**
**A1**

(12) # EUROPÄISCHE PATENTANMELDUNG

(21) Anmeldenummer: 86100170.9

(22) Anmeldetag: 08.01.86

(51) Int. Cl.⁴: **H 04 B 3/14**

(30) Priorität: 10.01.85 DE 3500631

(43) Veröffentlichungstag der Anmeldung:
**23.07.86 Patentblatt 86/30**

(84) Benannte Vertragsstaaten:
**AT CH DE FR GB LI NL SE**

(71) Anmelder: **Siemens Aktiengesellschaft**
**Berlin und München Wittelsbacherplatz 2**
**D-8000 München 2(DE)**

(72) Erfinder: **Pfitzenmaier, Gerhard, Dr.-Ing.**
**Eschenrieder Strasse 21**
**D-8038 Gröbenzell(DE)**

(54) **Laufzeitentzerrer.**

(57) Angegeben werden Laufzeitentzerrer, die als symmetrisches Kreuzglied, als davon abgeleitete Strukturen oder als Darlington-Entzerrer ausgebildet sind und bei denen die Einstellbarkeit der Laufzeitwellen an einer Reaktanz vorgenommen wird. Diese laufzeitbestimmende Reaktanz wird nach Struktur und Elementewerten derart festgelegt, daß in einem vorgebbaren Frequenzbereich eine wenigstens näherungsweise konstante Laufzeit auftritt, Zugleich bleiben die Frequenzlagen der Reaktanznullstellen bzw. der Reaktanzpole erhalten, unabhängig von den für Vorzeichen und Größe der Laufzeitauslenkungen verantwortlichen Werten der einstellbaren Elemente. Dadurch werden Fixpunkte der Konstantlaufzeit gebildet. Eine Ausbildung der Reaktanzschaltung als Leitwert- oder als Widerstandspartialbruchschaltung ist möglich.

FIG 2a

FIG 2b

EP 0 188 223 A1

Siemens Aktiengesellschaft     .   Unser Zeichen:
Berlin und München ·       VPA   85 P 1009 E

## Laufzeitentzerrer

Die Erfindung betrifft einen Laufzeitentzerrer gemäß dem Oberbegriff des Patentanspruches 1.

Die selektiven Komponenten von Nachrichtenübertragungssysteme verursachen frequenzabhängige Dämpfungs- und Laufzeitverzerrrungen, die durch entsprechende nachgeschaltete Entzerrer - fest abgestimmt oder veränderbar - wieder ausgeglichen werden müssen. Die nach dieser Entzerrung verbleibenden Restfehler weisen in der Regel ein typisches rippelförmiges Verhalten nach Art einer Sinusfunktion auf, das jedoch trotz einer meist vergleichsweise kleinen Amplitude oft nicht toleriert werden kann.

Aus diesem Grund ist es wünschenswert, zur Restfehlerentzerrung einen einstellbaren Entzerrer, der hier auch Laufzeitwellen-Entzerrer genannt sei, einzusetzen, dessen Rippelamplitude - von einer näherungsweise konstanten Grundlaufzeit ausgehend - stufig oder stetig in positiver oder negativer Richtung ausgelenkt werden kann.

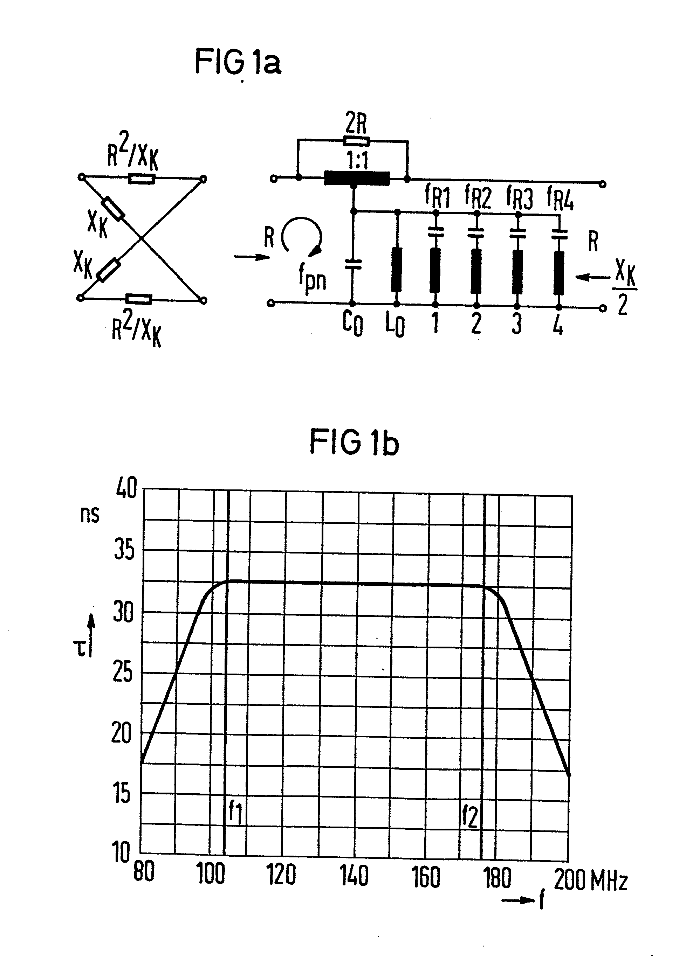

Konventionelle Laufzeitentzerrer werden als symmetrische Kreuzglieder mit zueinander bezüglich des Abschlußwiderstandes dualen Brücken-Reaktanzzweigen oder vorzugsweise als davon abgeleite Strukturen oder mit zueinander bezüglich des Abschlußwiderstandes dualen Brücken-Reaktanzzweigen oder als sogenannte Darlington-Entzerrer realisiert, wie dies später anhand der Fig. 1a und 1b noch erläutert wird. Bei den letzteren ist einer der beiden Brückenzweige durch einen ohmschen Widerstand 2R ersetzt,

Hka 1 Or / 10.1.1985

wodurch sich bei unverändertem Laufzeitverhalten eine konstante Grunddämpfung von 6.02 dB einstellt.

Beispielsweise ist es in diesem Zusammenhang aus dem Buch von G. Wunsch, "Theorie und Anwendung linearer Netzwerke" Teil 1 (Akademische Verlagsgesellschaft Geest und Portig KG, Leipzig, 1961) Seiten 54ff, 63ff bekannt, daß die Kreuzgliedreaktanz eines Allpasses, der in einem definierten Frequenzbereich eine wenigstens näherungsweise konstante Laufzeit aufweist, als Leitwert- oder Widerstands-Partialbruchschaltung darstellbar ist, wie dies aus Fig. 1a ebenfalls erkennbar ist. Außerdem sind Berechnungsverfahren zur entsprechenden Dimensionierung dieser Reaktanzen geläufig. Weiterhin ist bekannt, daß bei den Nullstellen, bzw. Polen der laufzeitbestimmenden Kreuzgliedreaktanz von einstellbaren Laufzeitentzerrer dann Fixpunkte der Laufzeit auftreten, wenn diese Nullstellen bzw. Pole durch die Variation der veränderbaren Schaltelemente in ihrer Frequenzlage nicht beeinflußt werden. Nähere Einzelheiten hierüber finden sich in den Aufsätzen von G. Pfitzenmaier "Die Synthese einstellbarer Laufzeitentzerrer mit Fixpunkten" (Frequenz 38, 1984, Heft 2, Seiten 30-36) und "Ein Beitrag zur Realisierung einstellbarer Laufzeitentzerrer mit Fixpunkten" (Frequenz 38, 1984, Heft 3, Seiten 54-62). In diesen Aufsätzen wird detailliert berichtet, wie solche einstellbaren Kreuzgliedreaktanzen $X_K$ in die Kreuzglieder eingebaut werden müssen, bzw. wie geeignete Schaltungsumwandlungen vorgenommen werden, um möglichst wirtschaftliche Schaltungen zu erhalten.

Soll nun eine Variation der Laufzeitkurve erfolgen, so ändern sich in der Regel alle Elemente der laufzeitbestimmenden Kreuzgliedreaktanz, wodurch die Realisierung von einstellbaren Laufzeitentzerrern oftmals erschwert, wenn nicht gar unmöglich gemacht wird.

Der Erfindung liegt die Aufgabe zugrunde, Schaltungen und Bemessungsvorschriften für Laufzeitentzerrer anzugeben, bei denen einerseits die Einstellbarkeit bei einer möglichst konstanten Laufzeit in einem vorgebbaren Frequenzbereich erhalten bleibt und bei denen andererseits die Zahl der einstellbaren Elemente möglichst gering ist.

Diese Aufgabe wird bei einem Laufzeitentzerrer gemäß dem Oberbegriff des Patentanspruches 1 gemäß der Erfindung nach den kennzeichnenden Merkmalen des Patentanspruches 1 gelöst.

Eine vorteilhafte Ausgestaltung ist im Patentanspruch 2 angegeben.

Anhand von Ausführungsbeispielen wird nachstehend die Erfindung noch näher erläutert.

Es zeigen in der Zeichnung

Fig. 1a  einen bekannten, beispielsweise nach dem eingangs genannten Buch von G. Wunsch entworfenen Darlington-Laufzeitentzerrer mit einer in Leitwert-Partialbruchschaltung vorliegenden Reaktanz vom Grad $n = 10$ zur Approximation der Konstantlaufzeit $\tau_0 = 32{,}5$ ns im Frequenzintervall $f_1 = 104$ MHz ... $f_2 = 176$ MHz, zugleich ist die äquivalente Kreuzgliedschaltung mit den Brückenreaktanzen $X_k$ und $\frac{R^2}{X_k}$ dargestellt,

Fig. 1b  den Verlauf der Laufzeit $\tau$ in Abhängigkeit von der Frequenz f zwischen den Frequenzen 80 und 200 MHz, wobei die Frequenzen $f_1$ und $f_2$ diejenigen vorgebbaren Frequenzen sind, zwischen

denen die Laufzeit $\tau$ möglichst konstant sein soll,

Fig. 2a einen schaltungsmäßig gleichartig aufgebauten Laufzeitwellen-Entzerrer wie in Fig. 1a, jedoch ist die Bemessung nach der Erfindung vorgenommen,

Fig. 2b den Verlauf der Laufzeit $\tau$ in Nanosekunden für die Schaltung von Fig. 2a, wobei im Ausführungsbeispiel von Fig. 2a bei den Resonanzfrequenzen $f_{R\gamma}$ ($\gamma = 1...4$) der Serienschwingkreise einstellungsunabhängige Laufzeitfixpunkte auftreten, das Vorzeichen und die Amplitude der Laufzeitauslenkungen werden allein über den Kapazitäts-Wert von $C_0$ gesteuert.

Die Schaltung von Fig. 1a zeigt als Beispiel einen sogenannten Darlington-Entzerrer, der im Längszweig einen angezapften Übertrager Ü enthält, der wiederum vom Widerstand 2R überbrückt wird. Am Anzapfungspunkt des Übertragers Ü liegt im Querzweig die Reaktanz $X_K/2$ besteht. Die möglichen Serienresonanzen sind mit dem Bezugshinweis $f_{R1}$ bis $fR_4$ kenntlich gemacht. Die möglichen Parallelresonanzen sind durch einen kreisförmigen Pfeil $f_{pn}$ kenntlich gemacht, wobei die Zahl n bekanntlich von der Schaltungsstruktur abhängig ist. Die äquivalente Kreuzgliedschaltung mit den Brückenreaktanzen $X_K$ und $\frac{R^2}{X_K}$ ist zur besseren Übersicht ebenfalls mitgezeichnet.

In Fig. 1a ist mit R der Wellenwiderstand der Schaltung bezeichnet. Die Reaktanz $X_K/2$ des Darlington-Laufzeitentzerrers gemäß Fig. 1a besteht aus der Parallelschaltung von vier Serienschwingkreisen 1,2,3,4 und einem Parallelschwingkreis aus der Spule $L_0$ und dem Kondensator $C_0$ und stellt somit die Leitwert-Partialbruchschaltung einer Reaktanz vom Grad n = 10 (10 Schaltelemente) dar.

Mit Hilfe eines gängigen Optimierungsverfahrens wurden in Vorversuchen die Elementewerte der Reaktanz $X_K$ so bestimmt, daß der Laufzeitentzerrer im Frequenzbereich $f = 104...176$ MHz ($f_1$ bis $f_2$) eine nahezu konstante Laufzeitcharakteristik $\tau_0 = 32.5$ ns aufweist (Fig. 1b). Nach den in den eingangs genannten Aufsätzen von Pfitzenmaier (Frequenz 1984, S.30-36, 54-62) gegebenen Ausführungen über einstellbare Laufzeitentzerrer bleiben die Laufzeitwerte $\tau_\nu$ ($\nu = 1...4$) bei den Resonanzfrequenzen der Serienschwingkreise $f_{R1} = 97.931$ MHz, $f_{R2} = 128.77$ MHz, $f_{R3} = 159.52$ MHz und $f_{R4} = 191.79$ MHz dann erhalten (Fixpunkte), wenn die zur Variation des Entzerrers benutzten Reaktanzelemente keinen Einfluß auf die Nullstellenlagen der Reaktanz haben. Solche Reaktanzelemente sind im vorliegenden Fall der Kondensator $C_0$ und die Spule $L_0$ des Parallelschwingkreises.

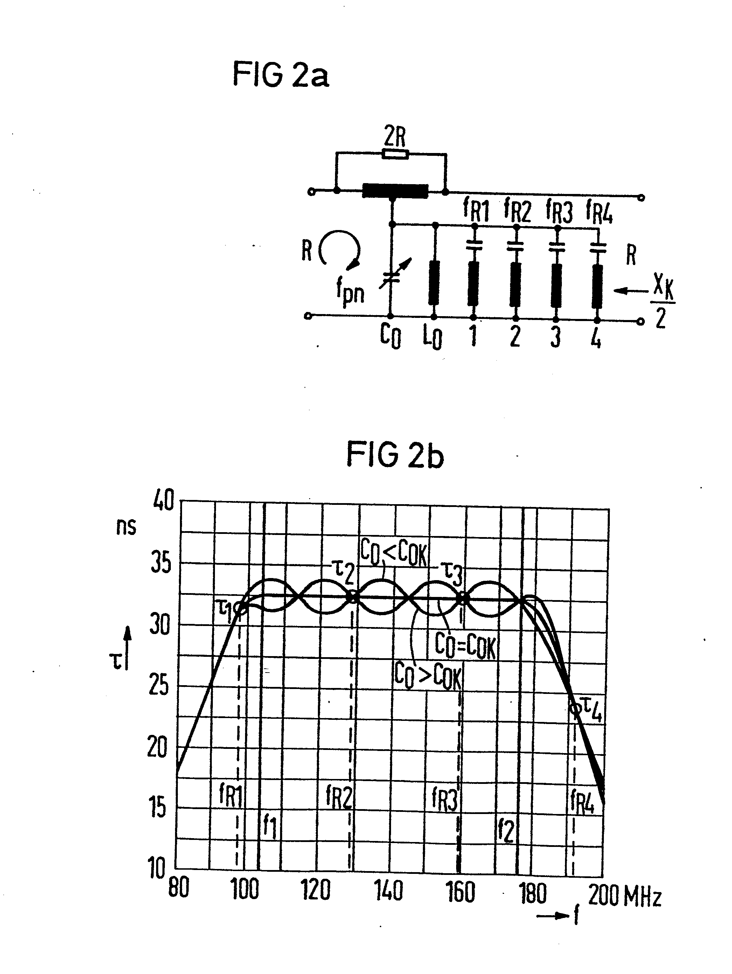

Wie bereits erwähnt, ist die Schaltung von Fig. 2a gleichartig mit der von Fig. 1a, so daß also die dort bereits gegebenen Erläuterungen entsprechend gelten Die Bemessung der Schaltelemente erfolgt jedoch gemäß der Erfindung und es können lediglich durch Ändern von $C_0$ z.B. alle erforderlichen Laufzeit-Verhältnisse eingestellt werden, wie aus Fig. 2b hervorgeht. Dort ist gezeigt, wie z.B. eine Vergrößerung von $C_0$ die geebnete Laufzeitkurve in eine sinusähnliche Kurve derart überführt, daß die Laufzeitwerte $\tilde{\tau}_\nu$ bei den Schwingkreis-Resonanzfrequenzen $f_{R\nu}$ als Fixpunkte unverändert bleiben. Im Bereich ursprünglich konstanter Laufzeit stellen somit die Fixpunkte die Nulldurchgänge der Sinuskurve dar. Eine Verkleinerung von $C_0$ lenkt die Laufzeitkurve nach der entgegengesetzten Laufzeitseite aus. Auf diese Weise können somit Laufzeitwellen erzeugt werden, deren Amplitude und Vorzeichen durch die Bemessung von $C_0$ gesteuert werden. Es ist aus Fig. 2b zu erkennen, daß sich bei kleinen Laufzeitauslenkungen auch

0188223

zwischen den Fixpunktfrequenzen $f_{R1}$, $f_{R2}$, $f_{R3}$, $f_{R4}$ zusätzliche, von der $C_0$-Einstellung nahezu unabhängige Kurvenschnittpunkte auf dem Niveau der Konstantlaufzeit bilden, die als weitere, wenn auch nicht exakte Fixpunkte anzusehen sind.

Bei Schaltungen nach Fig. 2, die entsprechend der in Fig. 2b gezeigten Wirkung bemessen sind, wird also allgemein die laufzeitbestimmende Kreuzgliedreaktanz $X_K$ des veränderbaren Laufzeitwellen-Entzerrers so nach Struktur und Elementewerten festgelegt, daß im interessierenden Frequenzbereich eine wenigstens näherungsweise konstante Laufzeit auftritt, und daß zugleich die Frequenzlagen der Reaktanznullstellen bzw. der Reaktanzpole unabhängig von den Werten der einstellbaren Elemente - diese sind für die Größe und das Vorzeichen der Laufzeitauslenkungen verantwortlich - erhalten bleiben und somit Fixpunkte der Konstantlaufzeit bilden. Besonders vorteilhafte Ausbildungen der Kreuzgliedreaktanz sind die bekannten Leitwert- und Widerstandpartialbruchschaltungen, da bei diesen in eindeutiger Zuordnung jeweils ein Schwingkreis allein für eine Nullstelle oder einen Pol und damit für einen Laufzeitfixpunkt verantwortlich ist.

2 Patentansprüche
2 Figuren

## Patentansprüche

1. Laufzeitentzerrer, der als symmetrisches Kreuzglied mit zueinander bezüglich des Abschlußwiderstandes (R) dualen Brückenreaktanzzweigen ($X_K$; $R^2/X_K$) oder als davon abgeleitete Struktur oder als Darlington-Entzerrer mit einem durch einen ohmschen Widerstand (2R) überbrückten Längsübertrager (Ü) und mit einer Querreaktanz ($\frac{1}{2}X_K$) realisiert ist, wobei die Einstellbarkeit der Laufzeitwellen an der Reaktanz ($\frac{1}{2}X_K$) erfolgt, d a d u r c h g e - k e n n z e i c h n e t , daß die laufzeitbestimmende Reaktanz ($X_K$) derart nach Struktur und Elementewerten (1,2,3,4,$L_0$,$C_0$) festgelegt ist, daß in einem vorgebbaren Frequenzbereich eine wenigstens näherungsweise konstante Laufzeit ($\widetilde{\tau}$) auftritt, und daß zugleich die Frequenzlagen der Reaktanznullstellen ($f_{R1}$,$f_{R2}$,$f_{R3}$,$f_{R4}$) bzw. der Reaktanzpole ($f_{pn}$) unabhängig von den für Vorzeichen und Größe der Laufzeitauslenkungen verantwortlichen Werten der einstellbaren Elemente ($C_0$ oder $L_0$) erhalten bleiben und da-durch Fixpunkte ($\widetilde{\tau}_1$, $\widetilde{\tau}_2$, $\widetilde{\tau}_3$, $\widetilde{\tau}_4$) der Konstantlaufzeit bilden.

2. Laufzeitentzerrer nach Anspruch 1, d a d u r c h g e k e n n z e i c h n e t , daß die Kreuzgliedreaktanz ($X_K$) als Leitwert- oder Widerstandpartialbruchschaltung ausgebildet ist.

FIG 1a

FIG 1b

## FIG 2a

## FIG 2b

**0188223**
Nummer der Anmeldung

**EP 86 10 0170**

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,A | FREQUENZ, Band 38, Nr. 2, Februar 1984, Seiten 30-36, Berlin, DE; G. PFITZENMAIER: "Die Synthese einstellbarer Lautzeitentzerrer mit Fixpunkten" * Seite 34, Zeilen 23-32 * | 1,2 | H 04 B 3/14 |
| A | US-A-4 395 688 (SELLERS) * Figuren 6,7 * | 1 | |

RECHERCHIERTE SACHGEBIETE (Int. Cl.4)

H 04 B
H 03 H

Der vorliegende Recherchenbericht wurde für alle Patentansprüche erstellt

| Recherchenort | Abschlußdatum der Recherche | Prüfer |
|---|---|---|
| DEN HAAG | 16-04-1986 | HOLPER G.E.E. |

KATEGORIE DER GENANNTEN DOKUMENTE
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument
& : Mitglied der gleichen Patentfamilie, übereinstimmendes Dokument

EPA Form 1503 03 R7